Europäisches Patentamt

(19) European Patent Office

Office européen des brevets

(11) Publication number: **0 131 459**
**A2**

(12) # EUROPEAN PATENT APPLICATION

(21) Application number: **84304660.8**

(22) Date of filing: **06.07.84**

(51) Int. Cl.⁴: **A 47 J 27/212**

(30) Priority: **08.07.83 US 512072**

(43) Date of publication of application:
**16.01.85 Bulletin 85/3**

(84) Designated Contracting States:
**CH DE FR IT LI NL SE**

(71) Applicant: **TSCO CORPORATION**
**Route 50 P.O. Box 83**
**Hickory Pennsylvania 15340(US)**

(72) Inventor: **Walls, Henry M.**
**1109 Greentree Road**
**Pittsburgh Pennsylvania 15220(US)**

(72) Inventor: **Sayers, George M., Jr.**
**213 South Fourth Street**
**Clearfield Pennsylvania 16830(US)**

(74) Representative: **Bayliss, Geoffrey Cyril et al,**
**BOULT, WADE & TENNANT 27 Furnival Street**
**London EC4A 1PQ(GB)**

(54) **Cooking vessel and whistling knob therefor.**

(57) A cooking vessel (2) is provided with a whistling knob (6) which has an internal passage (26) for carrying steam from a hole (36) in the cooking vessel to a rotary whistle chamber (28) molded to the knob. The whistle chamber is displaced from and eccentric to the knob axis. The lower surface of the knob has a cavity (38) which surrounds the knob axis, providing a steam passage inlet which is in communication with the hole in the cooking vessel regardless of the angular position of the knob relative to its axis. From the inlet cavity, steam passes through a vertically extending passage (40), a plenum chamber (42) and a horizontally extending passage (26) which introduces steam into the whistle chamber (28) at an angle which causes an audible whistle and rotary movement of the steam. The whistle chamber (28) has an outlet (32) which may be opened and closed by rotational movement of a valve ring (14) which extends circumferentially around the knob. The body of the knob is formed of two parts (10, 12) which are separable to permit removal of the valve ring and cleaning of the internal portions of the knob. A temperature indicating device may be incorporated in the knob.

EP 0 131 459 A2

./...

Croydon Printing Company Ltd

FIG.1

FIG.2

## DESCRIPTION

## COOKING VESSEL AND WHISTLING KNOB THEREFOR

This invention relates to a whistling knob for a cooking vessel, and to a cooking vessel which is provided with such a knob.

Devices which provide an audible whistle have been known for many years, both in teapots and other types of cooking vessels. In some instances exemplified by the disclosures of U.S. patents 196,443 and 259,580, the audible whistle is produced by introducing steam into a rotary chamber. A more recent device designed for waterless cooking vessels is described in U.S. patent 4,134,358, in which a knob is provided with a flange which lies inside the cooking vessel, a whistle chamber with centrally aligned inlet and outlet openings, and a sliding cutoff valve.

The present invention provides a knob and cooking vessel which have a number of highly desirable characteristics with respect to manufacture, assembly, operation and maintenance.

One object of the invention is to provide a whistling knob which is conveniently manufactured by molding in two part dies. The components of the device are easily assembled and easily attached to a cooking vessel. The cooking vessel itself does not require any significant modifications except for the provision of a small steam releasing hole which is located in proximity to a conventional weld stud. Due to the configuration of the device, the steam inlet thereof will be aligned with the steam releasing opening in the vessel, regardless of the rotational position of the knob with respect to its axis.

Another object of the invention is to provide a device which is efficient in producing an audible whistling sound in response to the generation of steam in the cooking vessel. The audible whistle is produced when there is a relatively small amount of steam emission, even in vessels which have loosely fitted lids. The knob is configured so that any steam condensing therewithin will return to the cooking vessel rather than flowing outwardly onto the exposed upper surface of the lid.

Another object is to provide an uncomplicated and effective valve means for disabling the whistling elements of the device.

Still another object is to provide a whistling knob which is easily disassembled and cleaned to remove any residue which may be deposited therein in the course of normal use.

In one respect, the invention relates to a whistling knob which has a whistling means for producing an audible whistle in response to the movement of steam therethrough, and a connector device for attaching the knob to the lid of the cooking vessel. The characterizing feature of the knob in this respect is that its lower surface has a downwardly open cavity positioned to receive steam from a hole which is formed in the vessel lid at a location displaced from the axis of the connector device. A steam passage carries steam from the cavity to the whistling means.

In another respect, the invention pertains to a whistling knob which has a whistle chamber, a surface for engaging a wall of a cooking vessel, a steam passage extending from the vessel-engaging surface to the whistle chamber, and a whistle chamber outlet for releasing steam to the atmosphere. This invention is characterized in that the steam passage is oriented to introduce steam into the whistle chamber at an angle which causes an audible whistle and rotary movement of steam in the whistle chamber.

A further aspect of the invention relates to a whistling knob of the type which has a knob body formed of an upper member and a lower member, whistling means for producing an audible whistle in response to the movement of steam therethrough, a steam passage for introducing steam to the whistling means, and a valve member for disabling the whistling means. The characterizing feature in this regard is that the valve member is rotatably supported between the upper member and the lower member for movement between an open position where steam is permitted to flow through the whistling means and a closed position where it prevents the flow of steam through the whistling means to disable the whistling means.

The invention may also involve a number of important ancillary features. For example, the valve member is a ring which has an opening therein. The knob includes two separable members which form a whistle chamber so that separation of the members from each other will expose the whistle chamber to permit convenient cleaning. The whistle chamber preferably has a vertical central axis located eccentrically with respect to the knob. The steam passage includes a vertical first portion which leads upwardly from the lower surface of the knob, and a horizontal second portion which leads to the whistle chamber. The steam passage may have a plenum chamber, and its horizontal portion preferably has converging walls for increasing the velocity of the steam which is moving toward the whistle chamber. The knob also may include a member coated with a known type of material which changes color in response to temperature changes. Metallic members in the knob conduct heat from the cooking vessel to the temperature-indicating member. The invention also contemplates a cooking vessel which has attached thereto a whistling knob having any or all of the features described above.

Although the invention may take many forms, a preferred embodiment thereof is shown in the accompanying drawings and described in the following description.

Fig. 1 is a side view of a cooking vessel utilizing a whistling knob constructed according to the invention, wherein the knob and portions of the cooking vessel are shown in cross section.

Fig. 2 is a sectional view of the knob as seen along line 2-2 in Fig. 1, except that the valve ring thereof is in its open position.

Fig. 3 is a sectional view of the lower member of the knob as seen along the lines 3-3 in Fig. 2.

Fig. 4 is a sectional view of the lower member of the knob as seen along the lines 4-4 in Fig. 2.

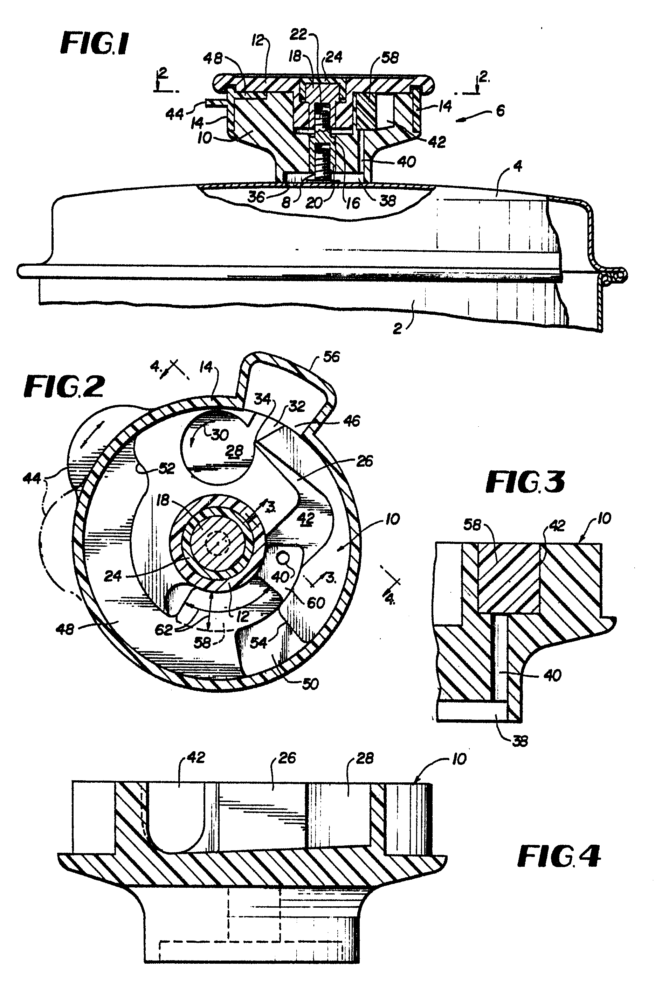

Fig. 1 shows a cooking vessel comprising a main body 2 and a cover or lid 4 which, acting together, provide the walls of a cooking enclosure. The lid 4 rests loosely on the main body 2 without any frictional or interference fit. A knob 6 is connected to the lid by an upstanding externally threaded stud 8, referred to in the art as a weld stud or weld nut, which is welded to the lid in accordance with conventional practice.

The body of the knob 6 comprises a lower member 10 and an upper member 12. These members and a valve member 14, described below, are molded from a thermosetting plastic of low thermal conductivity. A suitable material for this purpose is the phenolic molding compound sold under the trademark PLENCO 349 by Plastics Engineering Company, Sheboygan, Wisconsin. The members 10 and 12 are connected together by threaded brass inserts 16 and 18 which are molded in the plastic or are press fit into the plastic members after molding. These inserts have knurled external surfaces to assure their secure retention in the respective plastic members. As shown in Fig. 1, the lower insert 16 has an interiorly threaded lower portion 20 and an exteriorly threaded upper portion 22. The upper insert 18 has an interiorly threaded lower portion which is engaged by the external threads of the insert 16 in the lower member. This threaded engagement permits detachment of the upper member from the lower member to facilitate the cleaning of the internal passages and chambers of the knob.

Optionally, on the upper end of the brass insert 18, there is a coating formed of a material which changes color in response to temperature changes. A transparent cap 24 is placed over the coated surface of the insert. Such coating materials and their characteristics are well known and examples thereof are described in U.S. Patent 3,701,344, the disclosure of which is referred to and incorporated herein by reference.

The knob 6 is attached to the cooking vessel by threading the lower insert onto the weld stud 8 on the lid 4. When the cooking vessel is in use, heat from the cooking vessel is conducted by means of the metallic inserts 16 and 18 to the temperature indicating coating on the insert 18. Color changes of this coating provide the cook with a visual indication of the temperature of the cooking vessel.

In the operation of the present invention, the knob 6 will emit an audible whistle when steam is generated in the cooking vessel. This whistle signal is produced when the rate of steam generation is relatively low, and it does not require forcible or frictional attachment of the lid to the main body of the cooking vessel.

The principal sound generating elements of this invention, best seen in Fig. 2, are a steam passage 26 and a whistle chamber 28. The whistle chamber 28 has a vertical central axis which is eccentrically located with respect to the body of the knob 6. The side and bottom walls of the passage 26 and chamber 28 are molded in the lower member 10. The upper member 12 comprises the upper walls of passage 26 and chamber 28. The steam passage 26 introduces steam into the whistle chamber 28 at an angle which causes an audible whistle and rotary movement of steam in the whistle chamber. The general direction of this rotary movement is shown by the arrow 30. An outlet 32 releases the rotationally moving steam to the atmosphere. Applying the sound generating principle applicable to police whistles, the steam from passage 26 creates vorticies in the vicinity of a lip 34 of the whistle chamber. These vorticies produce a whistling sound which is reinforced by the steam which returns to the lip 34 after having moved in a rotary path in the chamber 28.

The optimum sizes and orientations of the sound generating components may be determined experimentally. In one case where the whistle chamber 28 had a diameter of about 14 mm., it was found that the best results were obtained when the width of the outlet of passage 26, as seen in Fig. 2, was in the range of about 0.38 to 0.76 mm., preferably about 0.56 to 0.69 mm., and the width of the outlet 32 was about 4 mm.

Steam is supplied to the knob by a steam releasing hole 36 in the lid 4. As shown in Fig. 1, this hole 36 is located beneath the lower knob surface which engages the lid 4. Passage means in the knob extend from its lower surface to the whistle chamber 28. This passage means includes an open circular cavity 38 in the lower surface of the knob, a vertically extending first portion 40, a plenum chamber 42, and a horizontally extending second portion previously identified as 26. The circular cavity 38 surrounds the central axis of the knob so that, regardless of the angular position of the knob relative to its axis, the steam release hole 36 in the lid will be in communication with the steam passage in

The knob. The plenum 42 improves the operation of the device, presumably because it permits the steam to settle down somewhat before entering the passage 26.

The upwardly extending passage 40 carries steam from the inlet cavity 38 to the plenum chamber 42, and the plenum chamber 42 has an outlet which provides steam to the horizontal passage 26. The horizontal passage preferably has converging walls so that it acts as a nozzle, increasing the velocity of steam which is moving toward the whistle chamber. For manufacturing convenience, the passage 40 and 26 preferably extend in true vertical and horizontal directions; however, the terms "horizontally extending" and "vertically extending" are intended to embrace inclined orientations which have horizontal and vertical components, respectively.

To encourage the drainage of condensed steam into the cooking vessel rather than to the outlet 32 of the whistle chamber, the whistle chamber 28, the horizontal passage 26 and the plenum chamber 42 are sloped downwardly toward the vertical passage. As shown in Fig. 4, this slope is about 2.5 degrees. Also to facilitate drainage, the plenum has a concave bottom wall as shown in Fig. 3.

Another feature of the invention is that the whistle chamber 28, passage 26 and plenum 42 may be easily cleaned simply by unscrewing the upper member 12 from the lower member 10. This, in effect, removes the upper wall of the whistle chamber, exposing this chamber to permit its convenient cleaning.

In many cooking situations, a whistle signal is unneeded or undesired. Also, some cooking processes are performed at subatmospheric pressures.

Therefore, the knob is provided with a valve means which disables the whistle and obstructs the steam passage of the knob. This valve is preferably a valve ring 14 which extends circumferentially around the knob body. The valve ring is movable by means of a projecting manually engageable tab 44. As shown in Fig. 2, the valve ring 14 has an opening 46 which, upon rotational movement of the valve ring, moves between the illustrated position where the whistle outlet 32 is open, and a closed position shown in broken lines where the whistle outlet is obstructed. To prevent the steam from striking the hand of a person closing the valve, the ring 14 has a shield 56 located at the opening 46. The shield has a closed upper end and an open lower end so that any escaping steam will be deflected downwardly toward the lid of the cooking vessel.

The valve ring also has a depending tang 58 which is operable to close off the upper end of portion 40 of the steam passage. Tang 58 projects into a flat-bottomed arcuate recess 60 in member 10, and this recess intersects the plenum chamber 42 as shown in Fig. 2. The location of the tang, and its circumferential and radial dimensions are shown by the arrows 62 in Fig. 2. When the valve ring 14 is in its open position, the tang leaves the passage portion 40 unobstructed as shown in Fig. 2 but, upon movement of the valve ring 14, the tang 47 occupies a passage-obstructing position as shown in Figs. 1 and 3.

The valve ring is concentric with and rotatably supported on the lower member 10, and it is retained on the lower member 10 by means of the overlying peripheral portion of the upper member 12.

The angular rotation of the valve ring 14 on the lower member is limited by an internal flange segment 48 molded integrally with the valve ring. This flange segment 48, shown in Figs. 1 and 2, is located in a depression 50 formed on the upper surface of the lower member 10. At the opposite ends of the depression 50, the knob member 10 has abutment surfaces 52 and 54 which are engaged by the respective ends of the flange 48 when the valve ring is at its open and closed positions.

From the foregoing description, it will be realized that the invention provides a cooking vessel with a whistling knob which is uncomplicated, highly effective and easily cleaned. From the standpoint of the manufacturer, it is readily manufactured, assembled and installed. Persons familiar with the field of the invention will recognize that the invention may take many forms other than the preferred embodiment which has been illustrated and described. Therefore, it is emphasized that the invention is not limited to the disclosed embodiment but is embracing of a wide variety of devices which fall within the spirit of the following claims.

0131459

## CLAIMS

1. A whistling knob (6) for a cooking vessel (2,4), said knob (6) having a body (10,12) with a surface for engaging a wall of a cooking vessel, a whistle chamber (28) in said knob, a steam passage (40,42,26) formed in said knob and extending from said surface to said whistle chamber (28), said whistle chamber (28) having an outlet for releasing steam to the atmosphere, characterized in that said steam passage (26) is oriented to introduce steam into said whistle chamber (28) at an angle which causes an audible whistle and rotary movement of steam in the whistle chamber.

2. A whistling knob (6) for a cooking vessel (2,4), said knob (6) having a body formed of an upper member (12) and a lower member (10), whistling means (28,34) for producing an audible whistle in response to the movement of steam therethrough, a steam passage (40,42,26) for introducing steam to said whistling means, and a valve member (14) for disabling said whistling means, characterized in that said valve member (14) is rotatably supported between said upper member (12) and said lower member (10) for movement between an open position where steam is permitted to flow through said whistling means (28,34) and a closed position where it prevents the flow of steam through said whistling means (28,34) to disable the whistling means.

3. A whistling knob (6) for a cooking vessel (2,4), said knob (6) having a whistling means (28,34) for producing an audible whistle in response to the movement of steam therethrough, said knob (6) being provided with a connector device (16) for attaching the knob to the lid (4) of a cooking vessel and a steam passage (40,42,26) formed in the knob for carrying steam to the whistling means, characterized in that said knob (6) has a lower surface provided with a downwardly open cavity (38) positioned to receive steam from a hole (36) formed in the vessel lid (4) at a location displaced from the axis of the connector device (16), said steam passage (40,42,26) extending from the cavity (38) to the whistling means (28,34) to carry steam to said whistling means.

4. A whistling knob (6) according to claim 1 or claim 3 further characterized in that said knob is provided with a valve member (14) for disabling said whistling means, said valve member (14) being rotatably supported for movement between an open position where it permits steam to flow through said whistling means (28,34) and a closed position where it prevents the flow of steam through said whistling means (28,34) to disable the whistling means.

5. A whistling knob (6) according to claim 2 or claim 4 further characterized in that said valve member (14) is a ring which has an opening (46) therein, said ring (14) when in its closed position obstructing the flow of steam, said ring when in its open position being disposed to permit the flow of steam through said opening.

6. A whistling knob (6) according to any of the preceding claims further characterized in that the knob includes two separable members (10,12) which form a whistle chamber (28) of said whistling means, each of said members (10,12) forming at least one wall of the whistle chamber (28) so that separation of the members from each other will expose the whistle chamber to permit convenient cleaning thereof.

0131459

7. A whistling knob (6) according to any of claims 2-6 wherein the whistling means includes a whistle chamber (28) in which the steam has a rotary motion, said steam passage (26) being oriented to introduce steam into said whistle chamber at an angle which causes such rotary motion and an audible whistle.

8. A whistling knob (6) according to any of the preceding claims further characterized in that said whistling means includes a whistle chamber (28) with a vertical central axis located eccentrically with respect to the knob, said steam passage including a vertically extending first portion (40) and a horizontally extending second portion (26), said first portion (40) of the steam passage leading from the lower surface of the knob, and said second portion (26) of the steam passage leading to the whistle chamber (28).

9. A whistling knob (6) according to claim 8 further characterized in that said second portion (26) of the steam passage has converging walls for increasing the velocity of steam which is moving toward said whistle chamber (28).

10. A whistling knob (6) according to claim 8 further characterized in that the steam passage includes a plenum chamber (42).

11. A whistling knob (6) according to any of the preceding claims wherein the knob is provided with a visibly exposed temperature-indicating member which changes color in response to temperature changes, said knob including metallic means (6,18) for conducting heat from the cooking vessel to said temperature indicating member.

- 14 -

0131459

12. A cooking vessel (2,4) having attached thereto a whistling knob (6) according to any of the preceding claims.

FIG.1

FIG.2

FIG.3

FIG.4